(19)

**Europäisches Patentamt**
**European Patent Office**
**Office européen des brevets**

(11) **EP 4 242 848 B1**

(12) **EUROPEAN PATENT SPECIFICATION**

(45) Date of publication and mention
of the grant of the patent:
**26.06.2024 Bulletin 2024/26**

(21) Application number: **22020131.3**

(22) Date of filing: **25.03.2022**

(51) International Patent Classification (IPC):
*G06Q 10/0631* (2023.01)    *G06Q 10/0633* (2023.01)
*G06F 11/30* (2006.01)    *G06F 11/32* (2006.01)
*G06F 11/34* (2006.01)    *G06F 21/34* (2013.01)

(52) Cooperative Patent Classification (CPC):
**G06F 11/3006; G06F 11/323; G06F 11/3447;
G06F 11/3466; G06F 21/34; G06Q 10/06316;
G06Q 10/0633;** G06F 2221/2139; G06F 2221/2153

(54) **METHOD AND COMPUTER SYSTEM FOR CAPTURE AND ANALYSIS OF REPETITIVE ACTIONS GENERATED BY THE EMPLOYEE-COMPUTER INTERACTION**

VERFAHREN UND COMPUTERSYSTEM ZUR ERFASSUNG UND ANALYSE VON SICH WIEDERHOLENDEN HANDLUNGEN, DIE DURCH DIE INTERAKTION ZWISCHEN ARBEITNEHMER UND COMPUTER GENERIERT WERDEN

PROCÉDÉ ET SYSTÈME INFORMATIQUE POUR LA CAPTURE ET L'ANALYSE DES ACTIONS RÉPÉTITIVES GÉNÉRÉES PAR L'INTERACTION EMPLOYÉ-ORDINATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.03.2022 RO 202200115**

(43) Date of publication of application:
**13.09.2023 Bulletin 2023/37**

(73) Proprietor: **UNIVERSITATEA "LUCIAN BLAGA"
550024 Sibiu; Judet Sibiu (RO)**

(72) Inventors:
• **Nicolaescu, Sergiu Stefan
Comuna Selimbar, Judet Sibiu (RO)**

• **Receu, Ilie
Sibiu; Judet Sibiu (RO)**
• **Kifor, Vasile Claudiu
550143 Sibiu, Judet Sibiu (RO)**

(74) Representative: **Strenc, Alexandru Cristian
Strenc Solutions for Innovation S.R.L.
Str. Lujerului Nr. 6
Bloc 100 Sc. B Et 3, Apt. 56 Sector 6
06631 Bucharest (RO)**

(56) References cited:
**US-A1- 2019 141 125    US-A1- 2020 206 920
US-A1- 2021 089 860    US-A1- 2021 158 268**

## Description

## Technical Field

Present invention relates to an online method and system able to collect, process and analyze data generated during the execution of computerized work activities, useful to organizations by providing a framework for extracting the elements of business analytics, as a support in management decisions, including the capture of repetitive actions, which is an opportunity for optimization / automation based on Robotic Process Automation RPA.

Invention aims at providing a technical solution able of automatically collecting relevant employee data, providing analysis and perspectives on business automation opportunities, and providing support in optimizing business decisions.

## Background Art

There are known patented and industrially implemented technical solutions in the field of RPA, a technology that allows the automation of the execution of repetitive activities, which requires a major intervention of the human operator. With the help of RPA, a computer system or software robot can imitate the actions of a human operator, to perform a computer assisted task. RPA can be used to facilitate interaction with software applications through its user interface, exactly as a human operator would do, without being needed integration with existing applications at the programming level, and thus eliminating the inherent difficulties in integrating various components.

Thus , the patent document US2020206920 (A1) - Systems and methods for identifying processes for robotic automation and building models therefore, presents the technical solution of a system and implementing method of discovering processes for Robotic Process Automation by using an algorithm that is based on finding repetitive patterns of events based on searching in the series of events for a minimum frequency of occurrence of a subset of events. Further aspects of the involved solution include generating RPA models to perform tasks determined to be processes for RPA.

Related solution implements a modern technology, however in its working philosophy there are foreseeable some limitations which might restrict its extended use, deriving first of all from the security and rapidity issues when accessing large amounts of input devices via user passwords, as well from limited capability to use a large number of events and to store the processed data, with undesired loses and making important effort. It is proposed the use of machine learning in order to create clusters and to find relationships between similar events, however this could prove to be more complicated and time consuming, comparing with a more rapid and simple solution to use the machine learning (AI) just and directly for filtering irrelevant processes.

The patent document US2019141125 (A1) - Cross application access provisioning system - proposes a plurality of robotic process automation (RPA) bots to provide cross-technology user access provisioning across multiple applications. Related system comprises a plurality of different systems, such as mainframe systems, client applications, web applications, and the like and the user is requested to input an access request into several different systems or applications in order to complete a task. By utilizing RPA, the invention is able to provision user access through a single request across all of the systems to which the user must be given access to complete the task.Thus, the purpose of the claimed solution is to automate and facilitate the access/login part of an organization's multitude of applications using RPA, in other words, it represents a use case of RPA. However, this solution is silent regarding the preliminary but extremely important phase of analyzing the opportunity/feasibility of such a system

It is equally known , the patent document EP 3 112 965 A1 - Robotic Process Automation - which presents a computer system capable of obtaining information on the images displayed on a display, for detecting activities within the images, by recording activity data and generating output data, which include a combination of information about images and related activities.

In the patent document WO2017001560A1 - Methods, systems, and apparatus, including computer programs encoded on a computer storage medium, for automating a manual process - it is presented the technical solution for identifying a process performed manually by a user interacting with a computer and which is automated by a robot configured to interact with another computer. In the automation process, images of the computer display are obtained while the user is interacting with the computer in the manual operation of the process, and a computerized visualization technique is applied to identify one or more activities associated with the process. Other actions include generating activity-related information and a process defined to cause the robot to perform the process automatically.

The patent document US 16/689193 - Scheduling Robots for Robotic Process Automation - describes the technical solution of a system and the related method for achieving a workflow for RPA. Thus, based on an indication received for the execution of a job scheduled to perform a RPA workflow for a user associated with a user group, a robot is identified from a group of robots associated with the activity and having the same access rights as the group by users. The robot is related to a computing device to execute the RPA workflow.

According to the solution in the patent document US16 / 779199 - Robotic Process Automation System with Distributed Download - a server responds to a request to perform a first automation task intended to process a work sequence, on a first computing device that is separate and independent of the server. The server receives a request from the first computing device to download the first automation task, and queries a distribution information file to identify one or more other computing devices that have a copy of the first automation task. The server provides the first computing device with an identifier for one or more other computing devices that has a copy of the first automation task. If the distribution information file does not contain an identification of any other device that has a copy of the first automation task, then the server processor has the first automation task taken over and provided to the first computing device.

There are also known architectures used in the workforce analytics, where a computer system can be integrated for capturing and analyzing repetitive actions generated by the employee-computer interaction (1).

The architecture in document (1), has a modular structure, integrates hardware devices and software applications, which have the ability to evaluate how employees interact, and has the following functionalities:

- Automatic data collection, as a result of interaction with the computer (mouse, keyboard, active window - in focus);
- Automatic import of data into the cloud;
- Data processing and analysis and delivery of relevant information through Machine Learning algorithms ML and Artificial Intelligence AI.

The system delivers information according to the specific requirements of the related management, such as employee performance and productivity, employee satisfaction, work-life balance, burnout risk, etc. Such architectures are able to process large amounts of data, collected over long periods of time, for a large number of employees.

Disadvantages of existing solutions, found in the analysis of the current state of research in the field, consists in that they do not provide a complete and integrated system for secure data collection on multiple devices, the automatic export of collected data to a cloud database, and the processing and analysis of large data. In addition, there have not been identified specific methods by which repetitive actions are automatically extracted from the computer interaction.

Organizations need a framework / system that enables them to collect data from multiple computers, to ensure data security and safety, to allow automatic storage in databases capable of processing large amounts of data. At the same time, there is a need to optimize and increase the speed of tasks, which can be achieved by identifying repetitive actions and automation.

Citations list:

1. Kifor, C. V., Nicolaescu, S. S., Florea, A., Săvescu, R. F., Receu, I., Tirlea, A. V., & Danu, R. E. (2021). Workforce analytics in teleworking. IEEE Access, 9, 156451-156464.
2. DeLeon, M. (2000). A study of sufficient conditions for hamiltonian cycles. Rose-Hulman Undergraduate Mathematics Journal, 1 (1), 6.
3. Chen, J., Lv, Z., & Song, H. (2019). Design of personnel big data management system based on blockchain. Future Generation Computer Systems, 101, 1122-1129.

We are considering the following functional disadvantages of the existing solutions:- Data collected from multiple devices cannot be correlated, or, where this is possible, it is based on very complex solutions;- Data are stored locally, requiring manual or initiated exports to be sent to databases capable of processing large amounts of data;- Data security and safety may be diminished;- Identification of repetitive actions is done on the basis of process review or using traditional methods (analysis, interviews, etc.), and not directly data driven- Possible re-occurrence of errors.

## Summary of invention

Technical problem solved by the present invention consists in the implementation of a method on a dedicated computer system, intended to collect data from several devices based on a personal key, at the same time, ensuring the automatic import of data into the Cloud, as well as the creation of an algorithmic model for capturing repetitive actions, in order to extract the business analysis elements necessary to support management decisions.

Technical solution according to the invention eliminates the afore mentioned disadvantages by the fact that it is based on a system dedicated to data collection, automatic transfer to a NoSQL database and on processing of this data based on an algorithm for capturing the repetitive actions. Data collection system uses an individual hardware key in order to control the recording process across multiple devices.

This invention describes a method of data analysis that identifies activities performed during a working day, with the ultimate goal of optimizing them by robotic process automation RPA.

The invention is specified by claim 1. Further preferred embodiments are defined by the dependent claims.

In order to identify automation opportunities of the robotic process automation, the technical solution of the invention describes an algorithmic method for identifying relevant repetitive actions, directly from the data recorded during the interaction with the computer.

The proposed architecture is capable of processing large amounts of data, collected over long periods of time, for a large number of employees. Data export is performed without any user intervention in a NoSQL database.

Main advantage of the realization and implementation of the technical solution offered by this invention for organizations, is to provide a complete and integrated hardware and software system for data collection in a non-intrusive manner during the execution of service tasks on multiple devices, for both home working and teleworking.

On a secondary level, the advantages of the invention are:- increased level of security and safety of data by storing them automatically in the Cloud;- giving to the participants the control over the collection time and allows them to view the collected data at the same time;- using of databases capable of processing and analyzing large amounts of data;-identifying the time intervals in which relevant repetitive actions are performed and present the opportunity for optimization and automation with software robots, with the ultimate goal of increasing the speed of performing tasks. These time intervals can be quantified in tangible savings by elementary mathematical formulas.

**Brief description of drawings**

The following, presents an embodiment of the invention, in connection also with FIG. 1 to Fig. 6, representing:

Fig. 1 - Architecture of the computer system for capturing and analyzing the repetitive actions generated by the employee-computer interaction;
FIG. 2- Work Analytics Platform WAP;
FIG. 3- Individual Hardware Key- IHK ; (A) - device circuit topography; (B) - view of the device board; (C) - electronic circuit
Fig.4 - IHK communication protocol with Data Collection Tool DCT;
FIG. 5- Context Switching Graph CSG - example;
Fig.6- Process flow diagram capturing repetitive actions.

**Description of embodiments**

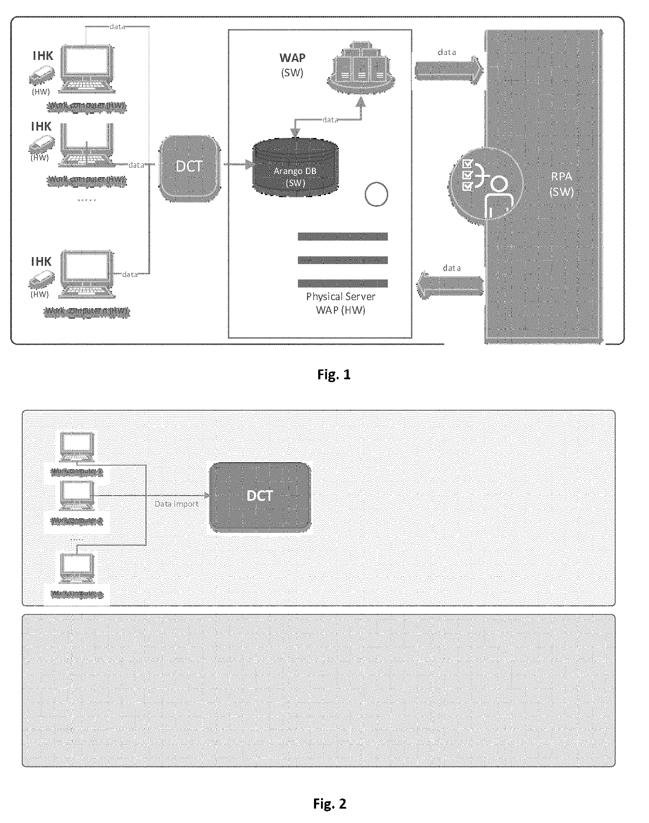

FIG. 1. Illustrates the architecture of the computer system for capturing and analyzing the repetitive actions generated by the employee-computer interaction, which implements the technical solution in the present invention.

The system consists of:

- Hardware infrastructure: Computer network, Physical server, Individual hardware key IHK for data collection;
- Software infrastructure: Data Collection Tool DCT, Work Analytics Platform WAP, robotic process automation RPA.

Hardware infrastructure. The computer network includes the employees' computers (HW 1... n), which are connected to the Internet and the physical server (HW Server), on which the WAP Platform and the ArangoDB NoSQL database are installed.

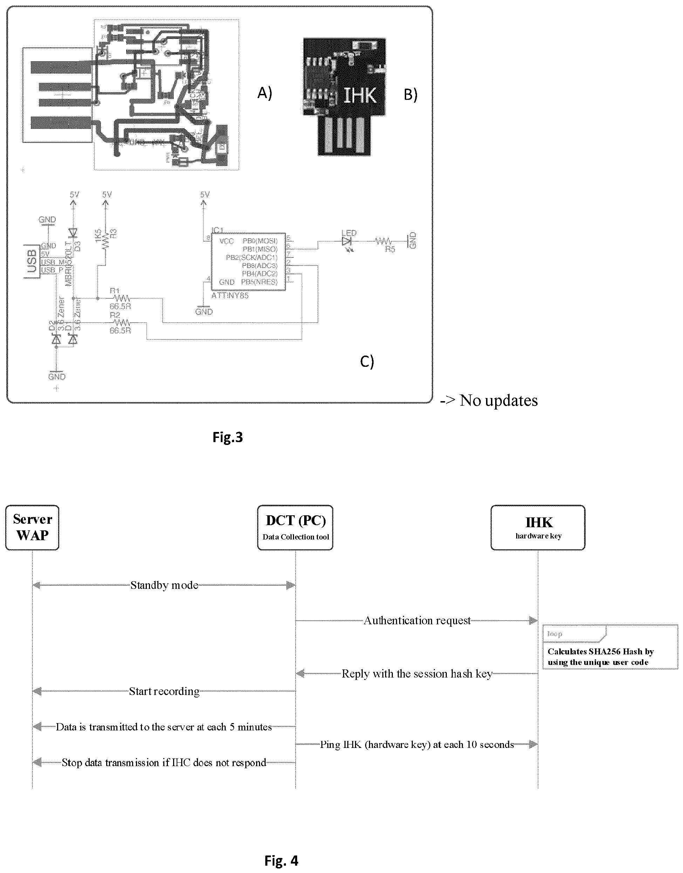

The IHK key, as detailed in Fig. 3, is based on a board shaped as an USB stick, with the thickness of the PCB (Printed Circuit Board) suitable for a USB port, without the need for an additional adapter. The board consists of an Atmel Tiny85 microcontroller, a LED to display the status of the device, a LED that confirms that it is powered and Zenner diodes that have the role of stabilizing the voltage on the serial communication bus. To be noted that the Attiny85 microcontroller is recognized in operating systems as a serial communication device on a COM port.

An unique identification code assigned to each user is written on the device. The IHK key connects through the USB port of the HW computers the employees are working on and communicates with the DCT Software Tool to authenticate the user and to start the registration process.

Data is automatically collected from the work computers during the work schedule as a result of the operator-computer interaction. All data is saved in collections in the ArangoDB NoSQL database. As data processing requirements increase exponentially, both in volume and variety, NoSQL offers a dynamic approach that processes unstructured data easily. It does not require fixed table schemes, allows horizontal scaling and avoids major data merging operations.

The WAP platform shown in Fig. 2 contains the following software modules: Raw Data Processing module RDP, Machine Learning module ML, Data Visualization & Analytics module DVA, and Capture Repetitive Actions module CRA.

Each software module is described below:

- The RDP module uses AQL queries (ArangoDB query language) to process and extract useful information for the WAP platform. Data aggregation operations, statistic mathematical functions, functions that work with strings are used.
- The ML module links libraries that contain sorting and clustering algorithms, and facilitates interfacing with the WAP platform. This block uses both the raw data from the ArangoDB collections and the results of the RDP module.
- The DVA module is intended for visual analysis and processing, the input data being the results of the modules described above.
- Main purpose of the CRA module is to implement an algorithmic model for capturing repetitive activities performed during computer activity and identifying automation opportunities.

The computer system for capturing and analyzing repetitive actions generated by the employee-computer interaction, acts according to the following procedure:

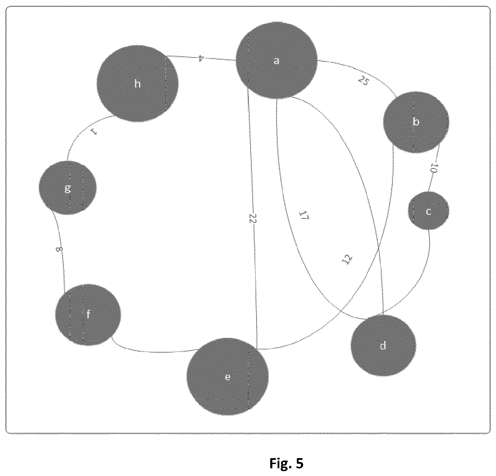

- Pre-setup: install DCT software on every use HW computer and HW server setup.
- In step 1 of the method, the data for each user is collected. The user has an IHK key, which is the trigger for saving and sending packets of data to the server. The recording and communication process is carried out according to the flow diagram in fig. 4.
- In step 2, the collected data is sent to the HW server and saved in the collections of a NoSQL database.
- In step 3, the Context Switch Graf CSG is built (see Fig. 5), based on all context changes, node spent time, and mouse / keyboard events.
- In step 4, the graph is traversed and the repetitive sub graphs are determined, using Hamiltonian-type sub-cycles; they are filtered to the maximum possible length.
- In step 5, supervised machine learning ML algorithms are applied, to filter out significant repetitive events for the user / process.
- In step 6 the results are presented in a visual form / report, in order to facilitate the subsequent implementation of the RPA.

The communication protocol between the work computer and the server (fig. 4) is made on the basis of an authentication process, a process achieved via the IHK key:

- The computer launches an authentication request to the IHK key. The application is launched through the DCT Software Tool.
- The IHK key has stored in memory the unique code, pre-registered in the WAP system and linked to the end user; a high level of security is provided by using the SHA256 hash algorithm [3] to generate a session key, thus avoiding the transmission of the unique code over the Internet.
- The IHK key sends the user's hash key to the computer.
- If the unique key is correct (validated by the WAP Platform), the registration process is activated.
- The key is queried every 10 seconds to ensure that the user / IHK are still connected to the computer. If IHK does not respond, data transmission to the server is disabled.

One advantage is that IHK does not use the classic method of user and password authentication, making it easier to use the system on multiple devices with minimal user action and providing additional protection against cyber attacks due to the fact the unique code is long enough not to be broken. In addition, the communication protocol of the IHK with DCT provides a high level of data storage security, as it is not only locally stored, but is transmitted to the cloud at a predetermined time interval.

The DCT software tool will use two threads:

- The role of the first thread is to query the event buffer of the operating system at a pre-set interval (<= 100 ms) and check if a new event has occurred. The newly identified event is added to a thread safe queue. This is a non-blocking mechanism and will not cause system problems.
- Thread 2 has a lower frequency (~ 5 min), within it is checked if there are events stored in the queue populated by the first thread and sends, as the case may be, these events to the application server.

If there are errors (e.g. lack of internet connexion) this queue does not empty and will be attempts to refer to the next cycle again. Events sent to the server are filtered by a list of keywords, which avoids sending sensitive data to the collection server (e.g. internet banking data).

The object sent to the server consists of the following properties: title of the active window (in focus), list of time-stamps of mouse-movement events, list of time-stamps of mouse-click event, list of temporary bookmarks of keyboard events.

The RPA algorithm of a CRA type, processes data generated by mouse, keyboard, and window context switches in order to identify repetitive patterns in employee activity.

The data collected by the DCT software is information generated by changing windows. When a context (window) changes, information about it is entered into the database: window title, time interval, and a unique window id in the current session (hwnd).

The algorithm consists in adding the transitions from one window to another, in a CSG Graph (fig. 5).

There are N windows in one session:

- Each window will be a node in the graph (given by the Tuple << hwnd, - unique window id and sumDT - total time spent in the window >>);
- Scroll the session from window to window and increment with each node change between 2 nodes. For example for windows A and B, the weight of the arc between A and B is initialized as gAB = 1 spent in window A, after which this weight of the arc is updated if there is a subsequent transition from A to B according to the formula:

$$gAB = gAB + 1$$

On each node in the graph, it is added the time spent on that task for each transition according to the formula:

$$CSG(A) = \sum_{k=0}^{n} deltaT(A)$$

Repetitive tasks appear in the form of cyclic graphs.

Each node is composed of an object that has the following three properties:

- Unique window identifier (HWND - unique ID assigned by Windows to each window when creating it);
- Time spent in the node;
- Number of interactions with mouse / keyboard peripheral devices;

Figure 5 exemplifies a CSG graph, which is in fact of a much higher size and complexity. For each day recorded by a user, another CSG graph will be calculated.

After performing this transition graph, will be scrolled the whole CSG graph in depth, and calculated a dynamic threshold, and then will be calculated all cyclic sub graphs that have arcs with values higher than the dynamic threshold, by using the classical method for determining Hamiltonian cycles [3].

All cyclic sub graphs resulting from the method described above represent repetitive actions.

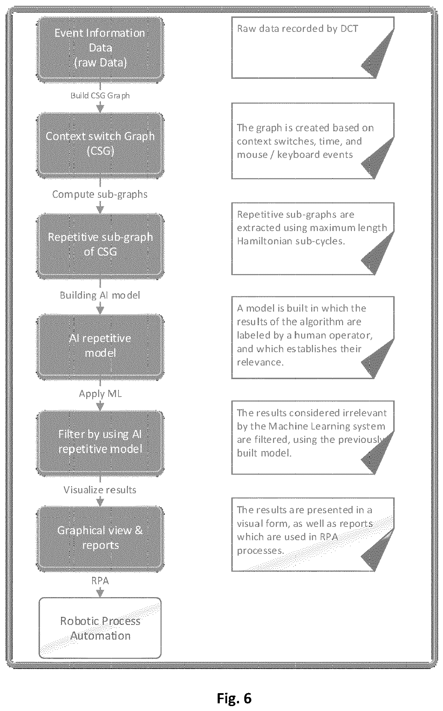

The diagram in Figure 6 describes in detail steps 3-6 of the system operation procedure, the explanations for each step can be viewed directly in the figure.

Due to the fact that the results in the algorithm may produce repetitive actions that are not relevant, it is proposed to use a supervised AI model, which is trained by a human user, in order to automatically filter irrelevant results based on the following considerations.

- for the construction of the learning model, from the web interface of the platform a human user will select from the web interface of the platform, repetitive graphs and will label them as "Relevant" or "Irrelevant";
- by using the ML Tensorflow Machine Learning library, the learning model is built based on all this information according to the Tensorflow specifications (.index .meta and .pb files);
- the initial AI model is built into the WAP Platform, with user-supplied inputs being used to increase the accuracy of the model due to the specifics of each organization;
- The higher the level of accuracy, the better the learning model is trained.

The input data for the algorithmic model for capturing repetitive actions are the recorded sessions, in the form of raw data - events regarding the user's interaction with the computer.

Output data are graphs determined by recurring activities based on the nodes defined above. Based on these graphs, reports are generated in order to be entered in the RPA module.

**Claims**

1. Computer system for capturing and analyzing repetitive actions generated by the employee-computer interaction, consisting of a hardware infrastructure comprising a computer network of the employee users, which are connected to the Internet and to a physical server (HW Server) on which it is installed a Work Analytics Platform(WAP) comprising a series of Raw Data Processing modules (RDP), a Machine Learning module (ML), a Data Visualization and Analysis module (DVA), a Robotic Process Automation module ( RPA) and an ArangoDB NoSQL database in which all relevant data are stored, **characterized in that**, in order to automatically collect data from working computers, during working hours, as a result of the operator-computer interaction, it uses an individual hardware key (IHK), which communicates with a Data Collection Tool module (DCT) to carry out the following steps:

   step 1- collect the data for each user,
   each user having a unique key saved on the Individual Hardware Key (IHK),
   with which a specific communication protocol which carries out the following steps:

   - launching, by the computer, an authentication request to the Individual Hardware Key (IHK), through the Data Collection Tool (DCT);
   - storing by the device (HW) in memory the unique code, pre-registered in the Work Analytics Platform (WAP) and linked to the end user,
   offering a high level of security by using the SHA256 hash algorithm to generate a session key whereby its is avoided to send the unique code over the internet
   - the Individual Hardware Key (IHK) sends to the computer the unique key of the user and if the unique key is correct, i.e. it is validated by the platform (WAP), the data recording process is activated;
   - the key is queried every 10 seconds to ensure that the user/key (IHK) is still connected to the computer, and if the key (IHK) does not respond, data transmission to the server is disabled. and trigger the process of recording, saving and sending data packets to the server (HW);

   step 2 -send via a series of Raw Data Processing modules (RDP) the collected data to the server (HW) and save the collected data in the collections of an ArangoDB NoSQL database, where all relevant data is stored;
   and the server to execute the following steps, in order to authenticate the user and to start the registration process:

> step 3 -build a CSG Graph based on all the context changes, the time spent in the node and the mouse/keyboard type events.
>
> step 4 -scroll, by means of the Capture Repetitive Actions module (CRA), the graph and determine the repetitive sub graphs, using Hamiltonian-type sub-cycles, which are then filtered according to the maximum possible length;
>
> step 5 -apply supervised Machine Learning (ML) algorithms, to filter significant repetitive events for each user/process;
>
> step 6 -process the results and present them in a visual form or report in the Data Vizualization and Analysis module (DVA), in order to facilitate the subsequent implementation of an RPA procedure via the Robotic Process Automation module (RPA).
>
> and thereby enabling
>
> the automatic import of data into the Cloud in the ArangoDB NoSQL database, thus making possible to manage large amounts of data, and in order to implement an algorithmic model for capturing repetitive tasks performed during computerised activity, a Capture Repetitive Actions module (CRA) that allows to identify the automation opportunities-managed by the Robotic Process Automation module (RPA).

**2.** System according to claim 1 wherein the Individual Hardware Key (IHK) is connected via the USB port of the HW computer (s) on which the employees work and communicates with the Data Collection Tool (DCT) in order to authenticate the user and start the registration process, and is based on a development board based on the ATTINY85 processor, on which is written a unique identification code assigned to each user, so that the data is automatically collected from the work computers during the working hours, as a result of the operator-computer interaction and are saved in collections, in the ArangoDB NoSQL database, providing a high level of security and safety of the data storage.

**3.** System according to Claim 1 wherein the Data Collection Tool (DCT) uses two threads, so that the first thread queries the operating system event buffer at a predetermined interval(<= 100 ms) and checks if a new event has occurred that once identified is added to a thread safe queue, and the second thread checks for events stored in the queue populated by the first thread and sends the events to the application server, and if there are system errors and the queue does not clears itself, it will attempt to retry sending to the next cycle, so that events sent to the server are filtered according to a keyword list, and the object sent to the server consists of the active window title, timestamps list, mouse motion events, bookmarks list, temporary mouse click event, list of temporary keyboard events bookmarks.

**Patentansprüche**

**1.** Computersystem zur Erfassung und Analyse sich wiederholender Aktionen, die durch die Mitarbeiter-Computer-Interaktion erzeugt werden, bestehend aus einer Hardware-Infrastruktur, bestehend aus einem Computernetzwerk der Mitarbeiter-Benutzer, die mit dem Internet und einem physischen Server (HW-Server) verbunden sind, auf dem es installiert ist eine Arbeitsanalyseplattform (WAP), die eine Reihe von Rohdatenverarbeitungsmodulen (RDP), ein Modul für Maschinelles Lernen (ML), ein Datenvisualisierungs- und Analyse Modul (DVA), ein Arbeitsanalyseplattform-Modul (RPA) und eine ArangoD NoSQL-Datenbank umfasst in dem alle relevanten Daten gespeichert sind, **dadurch gekennzeichnet, dass** es zur automatischen Erfassung von Daten von Arbeitscomputern während der Arbeitszeit infolge der Bediener-Computer-Interaktion einen individuellen Hardwareschlüssel (IHK) verwendet, der mit einem Datenerfassungsinstrument (DCT) kommuniziert, um folgende Schritte durchzuführen:

> Schritt 1 - sammeln die Daten für jeden Benutzer,
>
> wobei jeder Benutzer über einen eindeutigen Schlüssel verfügt,
>
> der auf dem Individual Hardware Key (IHK) gespeichert ist,
>
> mit dem ein bestimmtes Kommunikationsprotokoll welches die folgenden Schritte ausführt:
>
> > - starten einer Authentifizierungsanfrage für den individuellen Hardwareschlüssel (IHK) durch den Computer über das Data Collection Tool (DCT);
> > - speichern des eindeutigen Codes durch das Gerät (HW), der in der Arbeitsanalyseplattform (WAP) vorregistriert und mit dem Endbenutzer verknüpft ist,
>
> bietet durch die Verwendung des SHA256-Hash-Algorithmus zur Generierung eines Sitzungsschlüssels ein hohes Maß an Sicherheit, wodurch vermieden wird, dass der eindeutige Code über das Internet gesendet wird
>
> > - Der individuelle Hardwareschlüssel (IHK) sendet den eindeutigen Schlüssel des Benutzers an den Computer. Und wenn der eindeutige Schlüssel korrekt ist, d. h. von der Plattform (WAP) validiert wird, wird der Datenaufzeichnungsprozess aktiviert.

- Der Schlüssel wird alle 10 Sekunden abgefragt, um sicherzustellen, dass der Benutzer / Schlüssel (IHK) noch mit dem Computer verbunden ist, und wenn der Schlüssel (IHK) nicht antwortet, wird die Datenübertragung zum Server deaktiviert und den Prozess des Aufzeichnens, Speicherns und Sendens von Datenpaketen an den Server (HW) auslösen;

- Schritt 2 - senden die gesammelten Daten über eine Reihe von Rohdatenverarbeitungsmodulen (RDP) an den Server (HW) und speichern die gesammelten Daten in den Sammlungen einer ArangoDB NoSQL-Datenbank, wo alle relevanten Daten gespeichert sind;

und der Server, um den Benutzer zu authentifizieren und den Registrierungsprozess zu starten die folgenden Schritte auszuführen:

- Schritt 3- erstellen ein CSG-Diagramm, das auf allen Kontextänderungen, der im Knoten verbrachten Zeit und den Maus-/Tastaturtyp-Ereignissen basiert wird.
- Schritt 4 - scrollen, mithilfe des Modul zur Erfassung sich wiederholender Aktionen (CRA), den Graphen und bestimmen Sie die sich wiederholenden Teilgraphen mithilfe von Teilzyklen vom Hamilton-Typ, die dann entsprechend der maximal möglichen Länge gefiltert werden;
- Schritt 5 - anwenden überwachter Algorithmen für maschinelles Lernen (ML), um signifikante sich wiederholende Ereignisse für jeden Benutzer/Prozess zu filtern;
- Schritt 6 - verarbeiten die Ergebnisse und präsentieren sie in einer visuellen Form oder einem Bericht im Datenvisualisierungs- und Analyse Modul (DVA), um die anschließende Implementierung eines RPA-Verfahrens über das "Arbeitsanalyseplattform" Modul (RPA) zu erleichtern,

und dadurch zu ermöglichen

der automatische Import von Daten in die Cloud in der ArangoDB NoSQL Datenbank zu erstellen, die es ermöglicht, große Datenmengen zu verwalten und um eine zu implementieren algorithmisches Modell zur Erfassung sich wiederholender Aufgaben, die während computergestützter Aktivitäten ausgeführt werden, ein Modul zur Erfassung sich wiederholender Aktionen (CRA), das es ermöglicht, die vom Arbeitsanalyseplattform-Modul (RPA) verwalteten Automatisierungsmöglichkeiten zu identifizieren.

**2.** System nach Anspruch 1, wobei der Individual Hardware Key (IHK) über den USB-Port des/der HW-Rechner, an denen die Mitarbeiter arbeiten, angeschlossen wird und mit dem Datenerfassungsinstrument (DCT) kommuniziert, um den Benutzer zu authentifizieren und den Registrierungsprozess starten, und basiert auf einem Entwicklungsboard, das auf dem ATTINY85-Prozessor basiert, auf dem ein eindeutiger Identifikationscode geschrieben ist, der jedem Benutzer zugewiesen ist, so dass die Daten während der Arbeitszeit automatisch von den Arbeitscomputern erfasst werden Ergebnis der Interaktion zwischen Bediener und Computer und werden in Sammlungen in der Arango DB NoSQL -Datenbank gespeichert, was ein hohes Maß an Sicherheit und Schutz der Datenspeicherung gewährleistet.

**3.** System nach Anspruch 1, wobei das Datenerfassungsinstrument (DCT) zwei Threads verwendet, sodass der erste Thread in einem vorgegebenen Intervall (<= 100 ms) den Ereignispuffer des Betriebssystems abfragt und prüft, ob ein neues Ereignis aufgetreten ist Sobald er identifiziert ist, wird er zu einer Thread-sicheren Warteschlange hinzugefügt, und der zweite Thread sucht nach Ereignissen, die in der vom ersten Thread gefüllten Warteschlange gespeichert sind, und sendet die Ereignisse an den Anwendungsserver und wenn Systemfehler vorliegen und die Warteschlange sich nicht selbst löscht, wird das Senden im nächsten Zyklus erneut zu versuchen, sodass an den Server gesendete Ereignisse anhand einer Schlüsselwortliste gefiltert werden und das an den Server gesendete Objekt aus dem aktiven Fenstertitel, der Zeitstempelliste, Mausbewegungsereignissen, der Lesezeichenliste und temporär Mausklickereignis, Liste der temporären Lesezeichen für Tastaturereigniss, besteht.

## Revendications

**1.** Système informatique pour capturer et analyser les actions répétitives générées par l'interaction employé-ordinateur, constitué d'une infrastructure matérielle comprenant un réseau informatique des utilisateurs employés, qui sont connectés à Internet et à un serveur physique (HW Server) sur lequel il est installé une Plateforme d'Analyse du Travail (WAP) comprenant une série de modules de Traitement de Données Brutes (RDP), un module d'Apprentissage Automatique (ML), un module de Visualisation et d'Analyse de Données (DVA), un module d'Automatisation des Processus Robotiques (RPA) et une base de données ArangoD NoSQL dans lequel sont stockées toutes les données pertinentes, **caractérisé en ce que**, pour collecter automatiquement les données des ordinateurs de travail, pendant les heures de travail, suite à l'interaction opérateur-ordinateur, il utilise une Clé Matérielle Individuelle (IHK) qui communique avec un Outil de Outil de Collecte de Données (DCT) pour effectuer les étapes suivantes :

Étape 1 - collecter les données de chaque utilisateur,

chaque utilisateur disposant d'une clé unique enregistrée sur la Clé Matérielle Individuelle (IHK),

avec un protocole de communication spécifique qui effectue les étapes suivantes :

- lancement par l'ordinateur, une demande d'authentification auprès de la Clé Matérielle Individuelle (IHK), via l'Outil de Collecte de Données (DCT) ;
- stockage par p'appareil (HW) en mémoire le code unique, pré-enregistré dans la Plateforme d'Analyse du Travail (WAP) et lié à l'utilisateur final,

en offrant un haut niveau de sécurité en utilisant l'algorithme de hachage SHA256 pour générer une clé de session , évitant ainsi l'envoi du code unique sur Internet
- la Clé Matérielle Individuelle (IHK) envoie à l'ordinateur la clé unique de l'utilisateur et si la clé unique est correcte c'est à dire qu'elle est validée par la plateforme (WAP), le processus d'enregistrement des données est activé ;
- la clé est interrogée toutes les 10 secondes pour s'assurer que l'utilisateur/la clé (IHK) est toujours connecté à l'ordinateur, et si la clé (IHK) ne répond pas, la transmission des données vers le serveur est désactivée et on déclenche le processus d'enregistrement, de sauvegarde et d'envoi de paquets de données au serveur (HW) ;.

Étape 2- envoyer via une série de modules de Traitement de Données Brutes (RDP) les données collectées au serveur (HW) et sauvegarder les données collectées dans les collections d'une base de données ArangoDB NoSQL, où toutes les données pertinentes sont stockées, et le serveur pour exécuter les étapes suivantes, afin d'authentifier l'utilisateur et de démarrer le processus d'enregistrement:

Étape 3- construire un Graph CSG basé sur tous les changements de contexte,, le temps passé dans le noeud et les événements de type souris/clavier.
Étape 4- faire défiler, grâce au module Capture d'Actions Répétitives (CRA), le graphe et déterminer les sous-graphes répétitifs, à l'aide de sous-cycles de type hamiltonien, qui sont ensuite filtrés selon la longueur maximale possible ;
Étape 5 - appliquer des algorithmes d'Apprentissage Automatique (ML) supervisés, pour filtrer les événements répétitifs significatifs pour chaque utilisateur/processus ;
Étape 6- traiter les résultats et les présenter sous forme visuelle ou de rapport dans le module de Visualisation et d'Analyse des Données (DVA), pour faciliter la mise en oeuvre ultérieure d'une procédure RPA. via un module d'Automatisation des Processus Robotiques (RPA),

et permettant ainsi

l'import automatique des données dans le Cloud dans ArangoDB NoSQL base de données, permettant ainsi de gérer de grandes quantités de données, et afin de mettre en oeuvre un modèle algorithmique de capture des tâches répétitives effectuées lors d'une activité informatisée, un module Capture Actions Repetitive (CRA) qui permet d'identifier les opportunités d'automatisation gérées par le module d'Automatisation des Processus Robotiques (RPA).

2. Système selon la revendication 1, dans lequel la Clé Matérielle Individuelle (IHK) est connectée via le port USB du ou des ordinateurs matériels sur lesquels travaillent les salariés et communique avec l'Outil de Collecte de Données (DCT) afin d'authentifier l'utilisateur, et démarre le processus d'enregistrement, et repose sur une carte de développement basée sur le processeur ATTINY85, sur laquelle est écrit un code d'identification unique attribué à chaque utilisateur, de sorte que les données soient automatiquement collectées depuis les ordinateurs de travail pendant les heures de travail, comme un résultat de l'interaction opérateur-ordinateur et sont enregistrés dans des collections, dans la base de données ArangoDB NoSQL, offrant un haut niveau de sécurité et de sûreté du stockage des données.

3. Système selon la revendication 1, dans lequel l'Outil de Collecte de Données (DCT) utilise deux threads, de sorte que le premier thread interroge le tampon d'événements du système d'exploitation à un intervalle prédéterminé (<= 100 ms) et vérifie si un nouvel événement s'est produit qui une fois identifié, il est ajouté à une file d'attente thread-safe, et le deuxième thread vérifie les événements stockés dans la file d'attente remplie par le premier thread et envoie les événements au serveur d'applications, et s'il y a des erreurs système et que la file d'attente ne s'efface pas, elle tentera de réessayer d'envoyer au cycle suivant, de sorte que les événements envoyés au serveur soient filtrés en fonction d'une liste de mots clés et que l'objet envoyé au serveur soit constitué du titre de la fenêtre active, de la liste des horodatages, des événements de mouvement de la souris, de la liste des signets, des événements temporaires, événement de clic de souris, liste des signets temporaires des événements de clavier.

**Fig. 1**

**Fig. 2**

Fig.3

-> No updates

Fig. 4

Fig. 5

Event Information
Data
(raw Data)

Raw data recorded by DCT

Build CSG Graph

Context switch Graph
(CSG)

The graph is created based on
context switches, time, and
mouse / keyboard events

Compute sub-graphs

Repetitive sub-graph
of CSG

Repetitive sub-graphs are
extracted using maximum length
Hamiltonian sub-cycles.

Building AI model

AI repetitive
model

A model is built in which the
results of the algorithm are
labeled by a human operator,
and which establishes their
relevance.

Apply ML

Filter by using AI
repetitive model

The results considered irrelevant
by the Machine Learning system
are filtered, using the previously
built model.

Visualize results

Graphical view &
reports

The results are presented in a
visual form, as well as reports
which are used in RPA
processes.

RPA

Robotic Process
Automation

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2020206920 A1
- US 2019141125 A1
- EP 3112965 A1
- WO 2017001560 A1
- US 16689193 B
- US 16779199 B

### Non-patent literature cited in the description

- **DELEON, M.** A study of sufficient conditions for hamiltonian cycles. *Rose-Hulman Undergraduate Mathematics Journal,* 2000, vol. 1 (1), 6
- **CHEN, J. ; LV, Z. ; SONG, H.** Design of personnel big data management system based on blockchain. *Future Generation Computer Systems,* 2019, vol. 101, 1122-1129